# EUROPEAN PATENT SPECIFICATION

(11) **EP 4 248 909 B1**
(45) Date of publication and mention of the grant of the patent: **25.02.2026**
(21) Application number: 23162575.7
(22) Date of filing: 17.03.2023
(51) Int. Cl.: A61C 17/22, A61C 17/34

(54) **REPLACEMENT BRUSH HEAD AND ORAL HYGIENE DEVICE**
ERSATZBÜRSTENKOPF UND MUNDHYGIENEVORRICHTUNG
TÊTE DE BROSSE DE REMPLACEMENT ET DISPOSITIF D'HYGIÈNE BUCCALE

(30) Priority: 22.03.2022 CN 202220621513 U
(43) Date of publication of application: 27.09.2023
(73) Proprietor: Shenzhen Ya Bei Kang Technology Co., Ltd., Shenzhen 518103 (CN)
(72) Inventor: Ruan, Xiaoli, Gaozhou City (CN)
(74) Representative: Cleanthous, Marinos

(56) References cited:
- US-A1- 2004 049 868
- US-A1- 2013 029 289

## Description

### TECHNICAL FIELD

The present invention relates to the technical field of oral hygiene supply device, in particular to a replacement brush head and an oral hygiene device.

### BACKGROUND

In daily life, automatic cleaning and nursing devices are more and more widely used, and oral hygiene devices can clean teeth more conveniently and effectively. The oral hygiene device is generally divided into a replaceable brush head and a handle, and a mechanical movement of the handle is transmitted to the brush head, so as to cause the brush head to move, and then bristles on the brush head to swing to realize the function of cleaning the teeth. However, control degrees of swing arc and swing frequency of the oral hygiene device on the market are different, resulting in different effects on the cleaning degree of the oral cavity. As a direction of technical improvement and development in this field, it is an important that how to better control and adjust swing arc and swing frequency of the brush head such that the transmission is more stable and product performance is improved to achieve a better user experience.

US 2013029289 A discloses an attachment section suitable for connection to a handle section of an oral hygiene device. The attachment section includes an attachment housing having a first coupling structure suitable for establishing a connection with a second coupling structure of the handle section; at least a functional element mounted at the attachment housing for driven movement; a motion transmitter extending in a cavity formed inside of the attachment housing, the motion transmitter being functionally connected on one end with the functional element; and a first magnetic coupling element arranged at another end of the motion transmitter, the first magnetic coupling element including at least a permanent magnet or a magnetizable element suitable for establishing a magnetic connection with a second magnetic coupling element provided in the handle section.

### SUMMARY

The present invention is defined by the appended claims and provides a replacement brush head and an oral hygiene device, which solve the technical problems of difficulty in controlling the rotation angle, swing frequency and smooth transmission of the brush head, loud noise in the transmission process and high cost in assembly assistance.

In order to achieve the above object, the present invention provides the following technical solutions:

A replacement brush head for an automatic oral hygiene device includes: a bristle head 5, a housing 6, a transmission shaft 3 and a tail cover 1, the housing (6) has a head end and a tail end away from the head end, the transmission shaft 3 is arranged inside the housing 6 and extends from the tail end to the head end, and the bristle head 5 is arranged in a transmission manner at the head end of the housing 6 through the transmission shaft 3, and the tail cover 1 is arranged at a tail end of the housing 6. The transmission shaft includes a transmission rod, a top end of the transmission rod is provided with a transmission convex column, the transmission rod is provided with a guide groove, a guide rib and a spring limiting rib are arranged on an inner side of the housing, a damping spring is sheathed on the transmission rod, the damping spring is in a compressed state due to the spring limiting rib when the transmission shaft is mounted inside the housing, the guide groove corresponds to the guide rib to guide a longitudinal displacement of the transmission shaft along the axis of the housing that prevents the transmission shaft from deflecting during its back and forth longitudinal movement within the housing.

Preferably, a tail end of the transmission rod 30 is composed of a peripheral wall and a cavity formed by the peripheral wall, and a plane limiter 36 is provided on an outer side of the peripheral wall, and an assembly positioning groove 35 is provided on an outer side surface adjacent to the plane limiter 36.

Preferably, the peripheral wall is further provided with a glue dispensing port 33, and an inner side of the peripheral wall is further provided with a glue overflow groove 34.

Preferably, an outer wall of the tail cover 1 is provided with a convex point 11 and a rib 15 on one side, and an elastic damping arm 13 and the boss 14 on an opposite side, and a recess 12 is provided at a bottom end of the tail cover 1.

Preferably, the head end of the housing 6 is provided with a bristle head defining rib 64, a bristle head positioning column 63 and a fixing hole 65 at a connection with the bristle head 5.

A bottom step of the bristle head 5 is provided with a central hole 51 configured to receive the positioning column and an eccentric transmission hole 52, a side of the step is provided with a limiting groove 53, and the bristle head is provided with soft bristles 54. Ahead end of the transmission rod is provided with a transmission convex column configured to pass through the eccentric transmission hole, and the limiting groove is configured to correspond to the fixing hole so as to allow a fixing nail to be inserted into the limiting groove of the bristle head through the fixing hole of the housing.

An oral hygiene device comprises the replacement brush head of any of the above-mentioned embodiments, a magnetic electroplated iron block 2 and a handle 8, and the handle is provided therein with a handle transmission shaft 81, the handle transmission shaft 81 is connected to the replacement brush head in a transmission manner through the magnetic electroplated iron block 2.

By implementing the above technical solutions, the following technical effects are achieved: the replacement brush head and oral hygiene device provided by the present invention converts a linear motion of the transmission shaft device into a rotary motion, effectively controlling the rotation angle and swing frequency of the brush head, realizing the smooth transmission of the brush head, and meanwhile reducing the noise caused by the transmission process, and has the technical effect of convenient, fast and low-cost assembly.

### BRIEF DESCRIPTION OF THE DRAWINGS

FIG. 1 is a schematic structural diagram of an internal transmission of a replacement brush head provided by the present invention;
FIG. 2 is an exploded schematic diagram of the replacement brush head provided by the present invention;
FIG. 3 is a schematic structural diagram of an internal transmission shaft of the replacement brush head provided by the present invention;
FIG. 4 is a schematic structural diagram of the internal transmission shaft of the replacement brush head provided by the present invention;
FIG. 5 is a schematic structural diagram (front view) of a tail cover of the replacement brush head provided by the present invention;
FIG. 6 is a schematic structural diagram (perspective view) of the tail cover of the replacement brush head provided by the present invention;
FIG. 7 is a schematic structural diagram of a top end of a housing of the replacement brush head provided by the present invention;
FIG. 8 is a schematic structural diagram (front view) of a bristle head of the replacement brush head provided by the present invention;
FIG. 9 is a schematic structural diagram (left view) of the bristle head of the replacement brush head provided by the present invention;
FIG. 10 is a schematic cross-sectional structural diagram of the replacement brush head provided by the present invention;
FIG. 11 is a schematic structural diagram of an oral hygiene device provided by the present invention.

### DETAILED DESCRIPTION OF THE PREFERRED EMBODIMENT

In order to better understand the technical solutions of the present invention, the embodiments provided by the present invention are described in detail below with reference to the accompanying drawings.

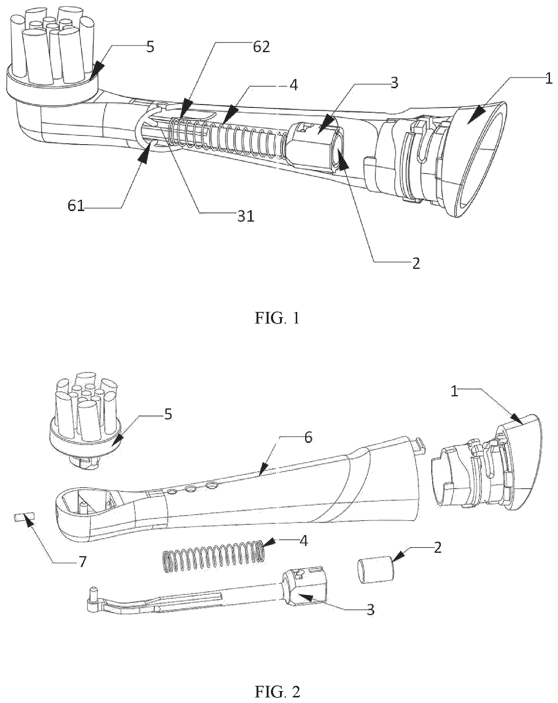

The present invention provides a replacement brush head, as shown in FIGs. 1-2, comprising: a bristle head 5, a housing 6, a transmission shaft 3 and a tail cover 1, the transmission shaft 3 is arranged inside the housing 6, and the bristle head 5 is arranged in a transmission manner at a top end of the housing 6 through the transmission shaft 3, and the tail cover 1 is arranged at a tail end of the housing 6. On the basis of the above embodiment, in other embodiments, further, the transmission shaft 3 includes a transmission rod 30, a top end of the transmission rod 30 is provided with a transmission convex column 32, and the transmission rod 30 is provided with a cross guide groove 31, a damping spring 4 is sheathed on the transmission rod 30, and preferably, a guide rib 61 and a spring limiting rib 62 are provided on an inner side of the housing 6. The cross guide groove 31 of the transmission shaft and the guide rib 61 inside the outer cover prevent the transmission shaft from deflecting during its front-back reciprocating movement inside the replacement brush head, such that the transmission process is more stable. With the damping spring 4 sheathed on the transmission shaft 3, when the transmission shaft is assembled into the housing, the damping spring is in a compressed state due to the spring limiting rib 62 on an inner wall of the housing, so that the transmission shaft body is suspended inside the housing, and the transmission shaft will not collide with the inner wall of the housing during its high-frequency front-back movement, which can effectively reduce noise and make the transmission more stable. The damping spring 4 can effectively reduce the inertial kinetic energy generated by the high-frequency front-back transmission of the transmission shaft, and convert the kinetic energy into elastic potential energy, resulting in more stable transmission, effectively reducing the transmission noise, reducing the wear between the transmission shaft and the bristle head due to long-term transmission, and improving the service life.

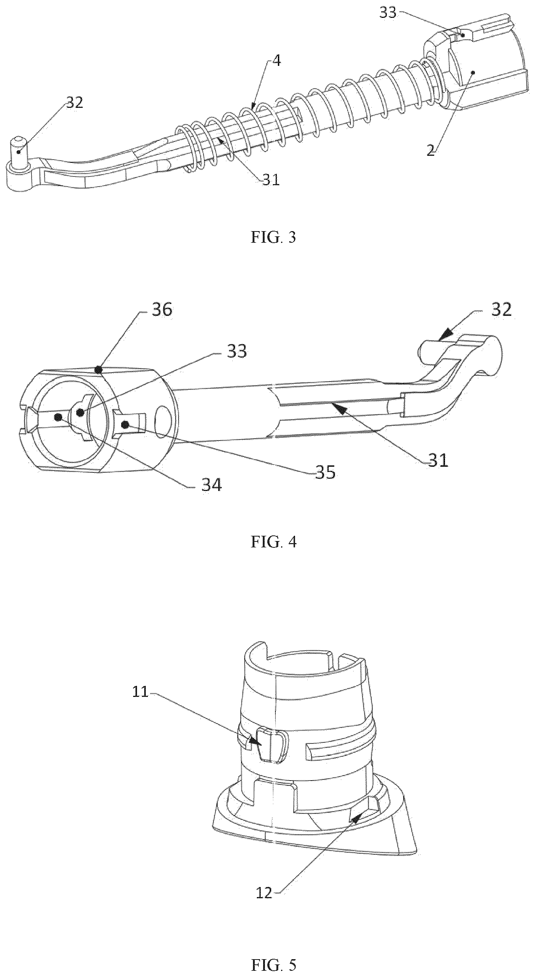

On the basis of the above embodiment, in other embodiments, further, a tail end of the transmission rod 30 is composed of a peripheral wall and a cavity formed by the peripheral wall, and a plane limiter 36 is provided on an outer side of the peripheral wall, and an assembly positioning groove 35 is provided on an outer side surface adjacent to the plane limiter 36. As shown in FIGs. 3-4, the plane limiter 36 and the assembly positioning groove 35, at the tail of the transmission shaft, enable automatic production of the assembly process, improve production efficiency and reduce production cost. As shown in FIGs. 5-6, a convex point 11 and a circle of ribs 15 are arranged on a middle wall of the tail cover body, which cause the tail cover to tightly fit with the housing. An elastic damping arm 13 on the tail cover realizes a better damping feel during a long-term replacement and pull-plug process of the handle 8 and the replacement brush head, so that the handle 8 and the replacement brush head fit more tightly. A front end of the elastic damping arm 13 is provided with a boss 14, and a recess 12 at a bottom of the tail cover and the boss 14 ensure that there will be no left-right offset during the assembly process of the tail cover and the housing, and after the assembly, there will be no misalignment and the fit is more tightly, and the tail cover position and the housing position are effectively prevented from rotating. In this way, the entire oral hygiene device is ensured to be in the working state, the internal transmission is stable and does not shake, the use is more stable, and the replacement brush head housing remains stationary in the oral cavity, and only the bristle part of the brush head rotates, reducing transmission noise and improving user experience.

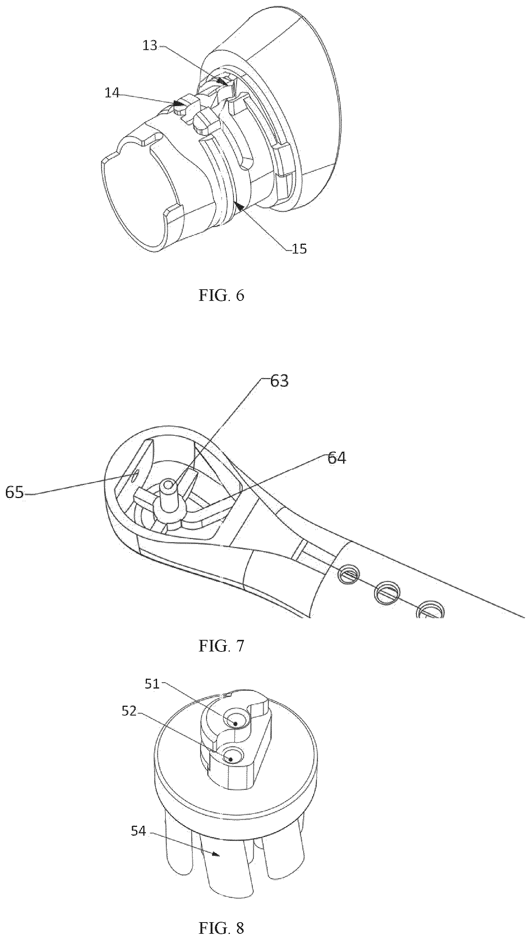

On the basis of the above embodiment, in other embodiments, further, as shown in FIGs. 5-6, the outer wall of the tail cover 1 is provided with a convex point 11 and a rib 15 on one side, and an elastic damping arm 13 and the boss 14 on the opposite side, and a recess 12 is provided at the bottom end of the tail cover 1. In this embodiment, preferably, as shown in FIG. 7, the top end of the housing 6 is provided with a bristle head defining rib 64, a bristle head positioning column 63 and a fixing hole 65 at a connection with the bristle head 5. The bottom step of the bristle head 5 is provided with a central hole 51 and an eccentric transmission hole 52, a side of the step is provided with a limiting groove 53, and the bristle head is provided with soft bristles 54. As shown in FIGs. 2, 8-9, when the bristle head 5 is assembled on the housing, the central hole 51 of the bottom step of the bristle head is assembled with the positioning column 63 of the housing, so that the bristle head rotates and reciprocates around the positioning column 63 in the working state. The eccentric transmission hole 52 is assembled with the transmission convex column 32 of the transmission shaft, so that the front-back reciprocating motion of the transmission shaft is converted into a rotary motion through the transmission of an eccentric shaft. At the same time, a fixing nail 7 is inserted into the limiting groove 53 of the bristle head 5 through the fixing hole 65 of the housing, so that the bristle head does not jump during the swing working process and the transmission is more stable. The transmission convex column 32 at a front end of the transmission shaft cooperates with the eccentric transmission hole 52 of the bristle head to assemble the bristle head on the housing, and the transmission shaft drives the bristle head to rotate, thereby achieving the effect of cleaning the oral cavity.

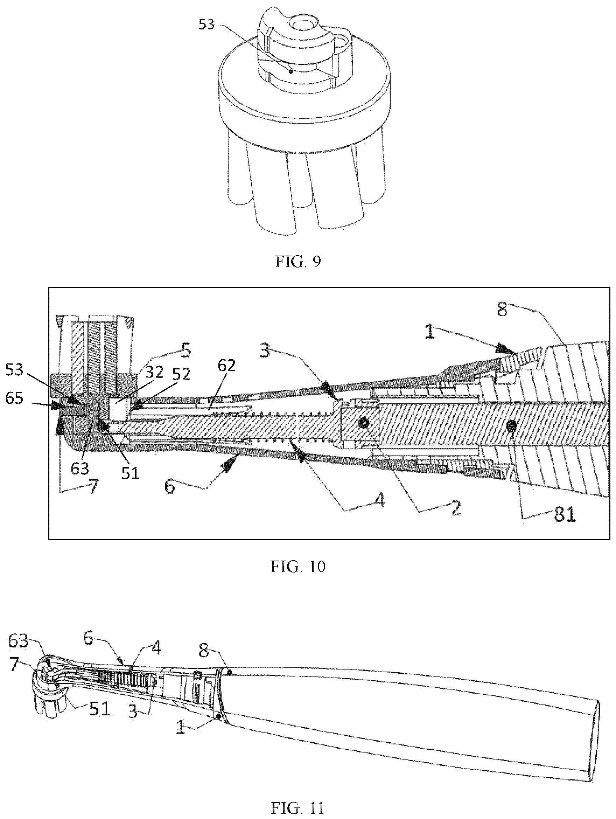

This embodiment also provides an oral hygiene device, as shown in FIG. 11, comprising the replacement brush head of any of the above-mentioned embodiments, a magnetic electroplated iron block 2 and a handle 8, and the handle is provided therein with a handle transmission shaft 81, the handle transmission shaft 81 is connected to the replacement brush head in a transmission manner through the magnetic electroplated iron block 2. The transmission shaft is assembled with a magnetic electroplated iron block 2, as shown in FIGs. 1-2, and after the handle is assembled with the replacement brush head, the magnetic electroplated iron block 2 connects the handle transmission shaft 81 on the handle to the transmission shaft in a transmission manner, thereby driving the bristle head to swing. In this embodiment, preferably, a glue dispensing port 33 and a glue overflow groove 34 on the peripheral wall are configured such that the magnetic electroplated iron block 2 more stably arranged in the cavity at a tail end of the transmission shaft, and further, the magnetic electroplated iron block 2 and the transmission shaft are more closely connected to prevent the transmission shaft from falling off during transmission or generating abnormal noise due to assembly clearance. The oral hygiene device converts the linear motion of the transmission shaft device into the rotary motion, effectively controlling the rotation angle and swing frequency of the brush head, realizing the smooth transmission of the brush head, and meanwhile reducing the noise caused by the transmission process, and has the technical effect of convenient, fast and low-cost assembly.

A replacement brush head and an oral hygiene device provided by the embodiments of the present invention have been introduced in detail above. For those skilled in the art, according to concepts of the embodiments of the present invention, changes will be made in the specific implementation and application scope. In summary, the contents of this specification should not be construed as limiting the present invention.

## Claims

1. A replacement brush head for an automatic oral hygiene device, comprising: a bristle head (5), a housing (6), a transmission shaft (3) and a tail cover (1), the housing (6) has a head end and a tail end away from the head end, the transmission shaft (3) is arranged inside the housing (6) and extends from the tail end to the head end, the bristle head (5) is arranged at the head end of the housing (6) and is connected to the transmission shaft (3), and the tail cover (1) is arranged at the tail end of the housing (6), wherein the transmission shaft (3) comprises a transmission rod (30), the replacement brush head is **characterized in that**, a top end of the transmission rod (30) is provided with a transmission convex column (32), the transmission rod (30) is provided with a guide groove (31), a guide rib (61) and a spring limiting rib (62) are arranged on an inner side of the housing (6), a damping spring (4) is sheathed on the transmission rod (30), the damping spring (4) is in a compressed state due to the spring limiting rib (62) when the transmission shaft (3) is mounted inside the housing (6), the guide groove (31) corresponds to the guide rib (61) to guide a longitudinal displacement of the transmission shaft along the axis of the housing that prevents the transmission shaft from deflecting during its back and forth longitudinal movement within the housing; wherein the head end of the housing (6) is provided with a bristle head limiting rib (64), a bristle head positioning column (63) and a fixing hole (65) at a connection with the bristle head (5); a bottom step of the bristle head (5) is provided with a central hole (51) configured to receive the positioning column (63) and an eccentric transmission hole (52), and a side of the step is provided with a limiting groove (53), and the bristle head is provided with soft bristles (54), the transmission convex column (32) is configured to pass through the eccentric transmission hole (52), and the limiting groove (53) is configured to correspond to the fixing hole (65) so as to allow a fixing nail (7) to be inserted into the limiting groove (53) of the bristle head (5) through the fixing hole (65) of the housing.

2. The replacement brush head according to claim 1, wherein a tail end of the transmission rod (30) is composed of a peripheral wall and a cavity formed by the peripheral wall, and a plane limiter (36) is provided on an outer side of the peripheral wall, and an assembly positioning groove (35) is provided on an outer side surface adjacent to the plane limiter (36).

3. The replacement brush head according to claim 2, wherein the peripheral wall is further provided with a glue dispensing port (33), and an inner side of the peripheral wall is further provided with a glue overflow groove (34).

4. The replacement brush head according to claim 1, wherein an outer wall of the tail cover (1) is provided with a convex point (11) and a rib (15) on one side, and an elastic damping arm (13) and a boss (14) on an opposite side, and a recess (12) is provided at a bottom end of the tail cover (1).

5. An oral hygiene device, comprising the replacement brush head according to any one of the claims 1-4, a magnetic electroplated iron block (2) and a handle (8), and the handle is provided therein with a handle transmission shaft (81), the handle transmission shaft (81) is connected to the replacement brush head in a transmission manner through the magnetic electroplated iron block (2).

## Patentansprüche

1. Ein Ersatzbürstenkopf für ein automatisches Mundhygienegerät, umfassend: einen Borstenkopf (5), ein Gehäuse (6), eine Übertragungswelle (3) und eine Endkappe (1), wobei das Gehäuse (6) ein Kopfende und ein vom Kopfende abgewandtes Endende aufweist, die Übertragungswelle (3) innerhalb des Gehäuses (6) angeordnet ist und sich vom Endende zum Kopfende erstreckt, der Borstenkopf (5) am Kopfende des Gehäuses (6) angeordnet und mit der Übertragungswelle (3) verbunden ist und die Endkappe (1) am Endende des Gehäuses (6) angeordnet ist, wobei die Übertragungswelle (3) eine Übertragungsstange (30) umfasst, **dadurch gekennzeichnet, dass** ein oberes Ende der Übertragungsstange (30) mit einer Übertragungs-Vorsprungsäule (32) versehen ist, die Übertragungsstange (30) mit einer Führungsnut (31) versehen ist, an einer Innenseite des Gehäuses (6) eine Führungsrippe (61) und eine Federbegrenzungsrippe (62) angeordnet sind, eine Dämpfungsfeder (4) auf der Übertragungsstange (30) angeordnet ist, wobei die Dämpfungsfeder (4) aufgrund der Federbegrenzungsrippe (62) in einem komprimierten Zustand ist, wenn die Übertragungswelle (3) im Gehäuse (6) montiert ist, wobei die Führungsnut (31) der Führungsrippe (61) entspricht, um eine Längsverschiebung der Übertragungswelle entlang der Achse des Gehäuses zu führen und zu verhindern, dass die Übertragungswelle während ihrer hin- und hergehenden Längsbewegung im Gehäuse auslenkt; wobei das Kopfende des Gehäuses (6) an einer Verbindung mit dem Borstenkopf (5) mit einer Borstenkopf-Begrenzungsrippe (64), einer Borstenkopf-Positioniersäule (63) und einer Befestigungsbohrung (65) versehen ist; wobei eine untere Stufe des Borstenkopfes (5) mit einer zentralen Bohrung (51) zur Aufnahme der Positioniersäule (63) und mit einer exzentrischen Übertragungsbohrung (52) versehen ist und eine Seite der Stufe mit einer Begrenzungsnut (53) versehen ist, und der Borstenkopf mit weichen Borsten (54) versehen ist, wobei die Übertragungs-Vorsprungsäule (32) dazu ausgebildet ist, durch die exzentrische Übertragungsbohrung (52) hindurchzugehen, und die Begrenzungsnut (53) dazu ausgebildet ist, der Befestigungsbohrung (65) zu entsprechen, sodass ein Befestigungsstift (7) durch die Befestigungsbohrung (65) des Gehäuses in die Begrenzungsnut (53) des Borstenkopfes (5) eingesetzt werden kann.

2. Der Ersatzbürstenkopf nach Anspruch 1, wobei ein Endende der Übertragungsstange (30) aus einer Umfangswand und einem durch die Umfangswand gebildeten Hohlraum besteht, und an einer Außenseite der Umfangswand ein Ebenenbegrenzer (36) vorgesehen ist, und an einer äußeren Seitenfläche benachbart zum Ebenenbegrenzer (36) eine Montage-Positioniernut (35) vorgesehen ist.

3. Der Ersatzbürstenkopf nach Behauptung 2, wobei die Umfangswand ferner mit einer Klebstoff-Auslassöffnung (33) versehen ist und an einer Innenseite der Umfangswand ferner eine Klebstoff-Überlaufnut (34) vorgesehen ist.

4. Der Ersatzbürstenkopf nach Anspruch 1, wobei eine Außenwand der Endkappe (1) auf einer Seite mit einem Vorsprungspunkt (11) und einer Rippe (15) und auf einer gegenüberliegenden Seite mit einem elastischen Dämpfungsarm (13) und einem Vorsprung (14) versehen ist, und am unteren Ende der Endkappe (1) eine Ausnehmung (12) vorgesehen ist.

5. Ein Mundhygienegerät, umfassend den Ersatzbürstenkopf nach einem der Behauptungen 1-4, einen magnetischen galvanisch beschichteten Eisenblock (2) und einen Griff (8), wobei im Griff eine Griff-Übertragungswelle (81) vorgesehen ist, und die Griff-Übertragungswelle (81) über den magnetischen galvanisch beschichteten Eisenblock (2) in einer Übertragungsverbindung mit dem Ersatzbürstenkopf steht.

## Revendications

1. Une tête de brosse de remplacement pour un dispositif automatique d'hygiène buccale, comprenant : une tête à poils (5), un boîtier (6), un arbre de transmission (3) et un couvercle arrière (1), le boîtier (6) comporte une extrémité de tête et une extrémité arrière éloignée de l'extrémité de tête, l'arbre de transmission (3) est disposé à l'intérieur du boîtier (6) et s'étend de l'extrémité arrière à l'extrémité de tête, la tête à poils (5) est disposée à l'extrémité de tête du boîtier (6) et est reliée à l'arbre de transmission (3), et le couvercle arrière (1) est disposé à l'extrémité arrière du boîtier (6), dans lequel l'arbre de transmission (3) comprend une tige de transmission (30), la tête de brosse de remplacement est **caractérisée en ce que** l'extrémité supérieure de la tige de transmission (30) est pourvue d'une colonne convexe de transmission (32), la tige de transmission (30) est pourvue d'une rainure de guidage (31), une nervure de guidage (61) et une nervure de limitation de ressort (62) sont disposées sur un côté intérieur du boîtier (6), un ressort d'amortissement (4) est gainé sur la tige de transmission (30), le ressort d'amortissement (4) est dans un état comprimé en raison de la nervure de limitation de ressort (62) lorsque l'arbre de transmission (3) est monté à l'intérieur du boîtier (6), la rainure de guidage (31) correspond à la nervure de guidage (61) pour guider un déplacement longitudinal de l'arbre de transmission le long de l'axe du boîtier, ce qui empêche l'arbre de transmission de se déformer pendant son mouvement longitudinal de va-et-vient à l'intérieur du boîtier ; dans lequel l'extrémité de tête du boîtier (6) est pourvue d'une nervure de limitation de tête de brosse (64), d'une colonne de positionnement (63) de tête de brosse et d'un trou de fixation (65) au niveau d'une connexion avec la tête à poils (5) ; un gradin inférieur de la tête à poils (5) est muni d'un trou central (51) configuré pour recevoir la colonne de positionnement (63) et d'un trou de transmission excentrique (52), et un côté du gradin est muni d'une rainure de limitation (53), et la tête à poils est munie de poils souples (54), la colonne convexe de transmission (32) est configurée pour passer à travers le trou de transmission excentrique (52), et la rainure de limitation (53) est configurée pour correspondre au trou de fixation (65) de manière à permettre à un clou de fixation (7) d'être inséré dans la rainure de limitation (53) de la tête à poils (5) à travers le trou de fixation (65) du boîtier.

2. La tête de brosse de remplacement selon la Revendication 1, dans laquelle une extrémité arrière de la tige de transmission (30) est composée d'une paroi périphérique et d'une cavité formée par la paroi périphérique, et un limiteur de plan (36) est prévu sur un côté extérieur de la paroi périphérique, et une rainure de positionnement d'assemblage (35) est prévue sur une surface latérale extérieure adjacente au limiteur de plan (36).

3. La tête de brosse de remplacement selon la revendication 2, dans laquelle la paroi périphérique est en outre pourvue d'un orifice de distribution de colle (33), et un côté intérieur de la paroi périphérique est en outre pourvu d'une rainure de débordement de colle (34).

4. La tête de brosse de remplacement selon la revendication 1, dans laquelle une paroi extérieure du couvercle arrière (1) est pourvue d'une pointe convexe (11) et d'une nervure (15) sur un côté, et d'un bras d'amortissement élastique (13) et d'un bossage (14) sur un côté opposé, et un récessus (12) est prévu à une extrémité inférieure du couvercle arrière (1).

5. Dispositif d'hygiène buccale, comprenant la tête de brosse de remplacement selon l'une quelconque des Revendications 1-4, un bloc de fer électroplaqué magnétique (2) et une poignée (8), et la poignée est pourvue d'un arbre de transmission de poignée (81), l'arbre de transmission de poignée (81) étant relié à la tête de brosse de remplacement de manière à assurer la transmission par l'intermédiaire du bloc de fer électroplaqué magnétique (2).
